# EUROPEAN PATENT SPECIFICATION

(11) **EP 4 235 508 B1**
(45) Date of publication and mention of the grant of the patent: **26.02.2025**
(21) Application number: 22386008.1
(22) Date of filing: 28.02.2022
(51) Int. Cl.: G06N 3/0464, G06N 3/096, G06N 5/045

(54) **KNOWLEDGE TRANSFER**
WISSENSÜBERTRAGUNG
TRANSFERT DE CONNAISSANCES

(43) Date of publication of application: 30.08.2023
(73) Proprietor: Fujitsu Limited, Kawasaki-shi, Kanagawa 211-8588 (JP)
(72) Inventor: Makariou, Savvas, London, W2 1SY (GB); Kasioumis, Theodoros, Hayes, UB3 3BY (GB); Townsend, Joseph, High Wycombe, HP12 3JE (GB)
(74) Representative: Haseltine Lake Kempner LLP

(56) References cited:
- ADAM KORTYLEWSKI ET AL: "Compositional Convolutional Neural Networks: A Robust and Interpretable Model for Object Recognition under Occlusion", ARXIV.ORG, CORNELL UNIVERSITY LIBRARY, 201 OLIN LIBRARY CORNELL UNIVERSITY ITHACA, NY 14853, 28 June 2020 (2020-06-28), XP081709620
- DAVID BAU ET AL: "Network Dissection: Quantifying Interpretability of Deep Visual Representations", ARXIV.ORG, CORNELL UNIVERSITY LIBRARY, 201 OLIN LIBRARY CORNELL UNIVERSITY ITHACA, NY 14853, 19 April 2017 (2017-04-19), XP080764045, DOI: 10.1109/CVPR.2017.354

## Description

The present invention relates to knowledge transfer, and in particular to a computer-implemented method, a computer program, and an information processing apparatus.

As artificial intelligence (Al) becomes more advanced, humans are challenged to comprehend and retrace how an algorithm/model produces a result. The whole calculation process of such an algorithm/model is often considered what is commonly referred to as a "black box" that is impossible to interpret. These black box models are created directly from data. Often, neither the engineers nor the data scientists who create an algorithm/model can understand or explain what exactly is happening inside the algorithm/model or how the Al algorithm arrives at a specific result. However, it is important for an organization to have a full understanding of the Al decision-making processes and not to trust Al models blindly. Model monitoring should be used and accountability of Al models ensured.

Explainable artificial intelligence (XAI) is a set of processes and methods that allow human users to comprehend (and trust) the results and output produced by machine learning algorithms. Explainable Al is used to describe an Al model, its expected impact, and its potential biases. XAI helps to ensure model accuracy, fairness, and transparency in Al-powered decision making. Explainable Al is crucial for an organization in building trust and confidence when implementing Al models in applications.

Al explainability also helps an organization adopt a responsible approach to Al development. That is, explainable Al is one of the key requirements for implementing responsible Al, a methodology for the large-scale implementation of Al methods in real organizations with fairness, model explainability and accountability. To help adopt Al responsibly, organizations need to embed ethical principles into Al applications and processes by building Al systems based on trust and transparency.

Explainable Al (XAI) has many benefits: it can keep the Al models explainable and transparent; it can manage regulatory, compliance, risk and other requirements and also minimize the overhead of manual inspection and costly errors; and furthermore, it can mitigate the risk of unintended bias whilst also building trust in the production of Al models with interpretability and explainability. Nonetheless, XAI is still relatively new and growing. Initially, the focus of Al research was to expand the capabilities of Al models and provide business solutions without need of explainability. That is something that is now changing for both XAI and AI ethics. As the implementation of Al has grown exponentially and AI models have become regularly used in companies and everyday life, interpretability and ethics have become a necessity.

In summary, explainable Al can help humans understand and explain machine learning (ML) algorithms, deep learning, and neural networks. Therefore, XAI is a topic of interest and research especially in the transportation and security sectors. XAI has seen a rise in popularity as the need for accountability has increased due to the expansion of Al into the autonomous vehicle and security sector. As people look forward to having reliable autonomous vehicles and secure services from AI, there is also a reluctance to adopt Al in case the Al leads to errors and due to the original "black box" nature of some Al methods making the identification of the issue difficult. Therefore, XAI is necessary when moving forwards. However, current XAI methods still have unexplored potential.

Furthermore, as Deep Learning has increased in popularity, the need to understand how exactly such models work and reach their decisions is increasing. There are a number of benefits of explainable Al including accountability. Accountability is especially important in the use of Al for autonomous vehicles, as problems/errors may result in accidents causing the loss of human lives. Accountability is also important in the use of Al in cyber security as problems/errors may result in the loss of e.g. money. When such scenarios occur, in order to correctly identify the problem/error that caused the scenario there should be transparency and therefore explainability. Even outside such scenarios, there is a need for accountability.

Most methods of producing explainable Al require manual input from humans during the training stage in order to provide the required labels for explainable Al to be accurate. This step is costly and time consuming and is a negative factor for companies/businesses looking to expand the applications of XAI.

That is, extracting relational information from neural networks (which can support explainability) involves a time-consuming process of labelling kernels (also referred to as filters) manually. This process is time and resource consuming but greatly enhances the output and accuracy of the model including the neural networks. Kernel labelling can also assist in knowledge distillation, i.e. distilling the complex model into a simple interpretable representation. Rules can be formed by combining active kernels, and these rules may explain the classification output of e.g. a convolutional neural network (CNN) in an interpretable logical language, in which quantized filter activations may be represented as logical atoms (H. Jacobsson, Rule extraction from recurrent neural networks: A taxonomy and review, Neural Computation 17 (2005) 1223-1263). Kernels that fire (i.e. that are activated) in response to spurious correlations in the data may be pruned to improve the performance of a model. Moreover, the accuracy of the original model can be improved by embedding the rules into training and closing the neural-symbolic cycle.

Rule extraction algorithms aim to distil a complex machine learning model into a simple interpretable representation that explains its decisions (H. Jacobsson, Rule extraction from recurrent neural networks: A taxonomy and review, Neural Computation 17 (2005) 1223-1263; Q. Zhang, Y. Yang, H. Ma, Y. N. Wu, Interpreting CNNs via decision trees, in: Proceedings of the IEEE/CVF Conference on Computer Vision and Pattern Recognition (CVPR), 2019) .

Reference may be made to any of:
ADAM KORTYLEWSKI ET AL: "Compositional Convolutional Neural Networks: A Robust and Interpretable Model for Object Recognition under Occlusion", ARXIV.ORG, CORNELL UNIVERSITY LIBRARY, 201 OLIN LIBRARY CORNELL UNIVERSITY ITHACA, NY 14853, 28 June 2020 (2020-06-28); and
DAVID BAU ET AL: "Network Dissection: Quantifying Interpretability of Deep Visual Representations", ARXIV.ORG, CORNELL UNIVERSITY LIBRARY, 201 OLIN LIBRARY CORNELL UNIVERSITY ITHACA, NY 14853, 19 April 2017 (2017-04-19), DOI: 10.1109/CVPR.2017.354.

As mentioned above, in order to extract accurate logical rules from kernels of a CNN, there is a need for manual labelling of the kernels. In particular, the default labels of kernels are usually expressed as 2 alphabetical letters, e.g. "CX" or "LW", and there is required a manual process of changing those to the corresponding labels, e.g. "Wall" or "Crowd" (depending on what feature that kernel is configured to detect in an input image). This labelling is a necessary step in providing logical rules and thus explainability. However, if a new network architecture is present, or if further training of the CNN occurred to improve performance, then those labels may not remain accurate. This leads to the time-consuming task of manually checking the labels or carrying out the labelling step once again in order to make sure the labels are correct.

In light of the above, a knowledge transfer method is desired.

The present invention is defined by the independent claims, to which reference should now be made. Specific embodiments are defined in the dependent claims.

Embodiments of the invention concern the problem of trying to label a CNN, for example a second CNN, when the process of labelling has already been carried out for a previous CNN. Conventionally, it is required to repeat the labelling process with the new CNN or with the previous CNN if re-training has occurred, or with the previous CNN if adjustments to the previous CNN have been made.

Transfer learning of kernel/filter labels based on the similarity of those filters' activations between two networks is not disclosed in the prior art. The use of the knowledge after manually labelling a network is extremely beneficial and embodiments may reduce the time required to label a network which is one of the most time-consuming and labor-intensive steps during the training stage. Embodiments may be applied to any new network that requires kernel labelling. Embodiments may help expand the explainability of Al through the reduction in the time required for the labelling process.

Embodiments may provide a reliable way of reducing the time required to label kernels e.g. for providing logical rules from networks. As the labelling process is often time and resource consuming and limits the ease of expansion for XAI, an embodiment, which reduces the time required for labelling, is beneficial.

The extracted information and assigned labels may provide some explanation of how networks process images and how they decide on the output, which is important in working towards explainable Al which improves the accountability and customers' security when using Al models in their applications.

If a model has been trained and labels assigned, when training of the model continues in order to correct any errors or biases found in the testing phase, the weights of the filters change. As the weights change then the filters may no longer respond to the same concepts as before (i.e. the filters may detect different features) and their label may be incorrect. An embodiment provides a way to transfer knowledge from the previous iteration of the model to the new iteration by transferring labels from the previous iteration as the first CNN to the new iteration as the second CNN, and therefore the labelling process does not need to begin again.

If a model has been trained and labels assigned, when there is new data availability or when testing has highlighted some hidden biases in the model, there may be a need to re-train a CNN from the beginning (from scratch). A CNN may also need to be re-trained from the beginning to improve the network's performance by changing some parameters. Even if the same seed is used, slight variations may alter the concepts that each filter responds to (i.e. the features which each filter detects). An example of a variation would be the order in which batches are inserted as this can alter the minibatch gradient descent. Embodiments provide a way to transfer knowledge from the previous iteration of the CNN to the re-trained CNN by transferring labels from the previous iteration as the first CNN to the re-trained CNN as the second CNN, and therefore the labelling process does not need to begin again.

Embodiments provide a way to transfer labels from a labelled CNN (first CNN) to a new CNN (second CNN) without labels without the need for the time- and labor-intensive process of manually assigning labels. The second CNN may have a different architecture to the first CNN and embodiments still enable labels to be transferred automatically.

Obtaining the first activation map may comprise inputting the input image into the first convolutional neural network and obtaining the first activation map.

Obtaining the second activation map may comprise inputting the input image into the second convolutional neural network and obtaining the second activation map.

The first activation map may comprise (a first tensor of) activation values indicating whether and/or how much the labelled filter is activated by regions of the input image.

The second activation map may comprise (a second tensor of) activation values indicating whether and/or how much the filter is activated by regions of the input image.

Calculating the similarity measure may comprise comparing (the) activation values of and their position within the first tensor/activation map with (the) activation values of and their position within the second tensor/activation map.

Calculating the similarity measure may comprise converting the first and second activation maps/tensors into first and second binary matrices, respectively, and calculating the similarity measure between the first and second binary matrices.

The method may comprise, before calculating the similarity measure between the first and second binary matrices, scaling the first and second binary matrices to dimensions of the input image, optionally using nearest neighbors interpolation.

Converting the first and second activation maps into first and second binary matrices may comprise setting each activation value (which has an absolute value) above a threshold value in the first and second activation maps/tensors to a first value (or to a predetermined non-zero value, or to 1), (and setting each activation value (which has an absolute value) equal to or below the threshold value to a second value (or to zero)).

The threshold value may be zero.

The activation values may all be non-negative.

Converting the first and second activation maps into first and second binary matrices may comprise setting each non-zero activation value in the first and second activation maps/tensors to the same value (or to a predetermined value, or to 1).

Calculating the similarity measure may comprise calculating an intersection-over-union, IoU, metric between the first and second binary matrices.

Calculating the similarity measure may comprise calculating a cosine distance metric between the first and second activation maps/tensors.

The first and second activation maps may each comprise at least one activated region comprising at least one activation value (which has an absolute value) above a threshold value (or whose activation values are/have an absolute value above a threshold value).

The first and second activation maps may each further comprise at least one non-activated region comprising at least one activation value (which has an absolute value) equal to or below a/the threshold value (or whose activation values are/have an absolute value equal to or below a/the threshold value).

The threshold value may be zero.

The first and second activation maps may each comprise at least one activated region comprising at least one non-zero activation value (or whose activation values are non-zero).

The first and second activation maps may each further comprise at least one non-activated region comprising at least one activation value equal to zero (or whose activation values are equal to zero).

Calculating the similarity measure may comprise calculating a similarity metric between the at least one activated region of the first activation map and the at least one activated region of the second activation map.

The first and second binary matrices may each comprise at least one activated region comprising at least one activation value having the first value (or whose activation values have the first value).

The first and second binary matrices may each further comprise at least one non-activated region comprising at least one activation value having the second value (or whose activation values have the second value).

The first value may be 1 and the second value may be zero.

The first and second binary matrices may each comprise at least one activated region comprising at least one non-zero activation value (or whose activation values are non-zero).

The first and second binary matrices may each comprise at least one non-activated region comprising at least one activation value having a value of zero (or whose activation values are equal to zero).

Calculating the similarity measure may comprise calculating an intersection-over-union, IoU, metric between (the at least one activated region of) the first binary matrix and (the at least one activated region of) the second binary matrix.

Since the first and second convolutional neural networks have the same (or a similar) architecture i.e. the first and second convolutional neural networks have the same number of each type of layer as each other and when their layers are arranged in the same order as each other), the labelled filter of the first convolutional neural network belongs to a layer that is the same as or that corresponds to a layer to which the filter of the second convolutional neural network belongs.

The first and second CNNs may be for use in an autonomous or semi-autonomous vehicle.

The method may further comprise using the second CNN in the control of an autonomous or semi-autonomous vehicle.

The method may comprise re-training the first CNN to provide the second CNN.

The method may comprise making adjustments to the first CNN to provide the second CNN.

The method comprises:
obtaining, based on the input image, a plurality of (said) first activation maps of a plurality of (said) labelled filters of (a layer of) the first (trained) convolutional neural network; selecting at least one first activation map each having an activation score above a threshold activation score or having the highest activation score; calculating the similarity measure for each of a plurality of pairs each comprising the second activation map and one of the at least one selected first activation maps; and labelling the filter of the second convolutional neural network with a label of the labelled filter corresponding to the first activation map belonging to the pair with the highest similarity measure (among the pairs) (optionally when the highest similarity measure is above the threshold similarity).

The threshold similarity referred to in the first aspect may be considered for example the next highest similarity measure among the pairs.

The threshold similarity referred to in the first aspect may be considered for example the next highest similarity measure (among the pairs).

Reference will now be made, by way of example, to the accompanying drawings, in which:
Figure 1 is a diagram illustrating a method;
Figure 2 is a diagram useful for understanding the method of Figure 1;
Figure 3 is a diagram useful for understanding the method of Figure 1;
Figure 4 is a diagram useful for understanding the method of Figure 1;
Figure 5 is a diagram useful for understanding the method of Figure 1;
Figure 6 is a diagram illustrating a system; and
Figure 7 is a diagram of an information processing apparatus.

The following terms may be used in the description.

Explainable A.I. - Explainable Al (XAI), or Interpretable Al, is artificial intelligence in which the results of the solution can be understood by humans. It contrasts with the concept of the "black box" in machine learning where even its designers cannot explain why an AI arrived at a specific decision. XAI may also refer to the tools and methods used to make Al more explainable. (https://en.wikipedia.org/wiki/Explainable_artificial_intelligence, https://www.ibm.com/watson/explainable-ai).

Neural Symbolic Integration - Neuro-Symbolic Integration concerns the combination of artificial neural networks (including deep learning) with symbolic methods, e.g. from logic based knowledge representation and reasoning in artificial intelligence (https://ieeexplore.ieee.org/document/8889997, https://arxiv.org/pdf/2010.09452.pdf, http://ceur-ws.org/Vol-2986/paper6.pdf).

Similarity Index - A metric which defines the similarity of two entities (for example images, regions in images, etc) for instance such that a similarity of 0 means the two entities are completely different, and a similarity of 1 means the two entities are identical (http://proceedings.mlr.press/v97/kornblith19a/kornblith19a.pdf,
http://arno.uvt.nl/show.cgi?fid=148087).

Kernel - A kernel is a location-invariant set of weights in a convolutional layer of a CNN that acts as a feature detector. A kernel may be referred to as a filter or a feature detector (https://towardsdatascience.com/an-introduction-to-convolutional-neural-networks-eb0b60b58fd7).

Activation - The output value of an individual neuron, or in the context of CNNs, a single value representing the overall activation map output by a kernel, so as to treat that kernel as if it were an individual neuron. The neuron/kernel is considered *active* if this value breaches some pre-defined threshold.

Activation map - A tensor of activations output by a set of neurons such as a kernel or layer. Unless stated otherwise, it may be assumed that 'activation map' refers to the output of a kernel. The term 'activation matrix' or 'feature map' may be used in reference to the same.

Activation Function - In artificial neural networks, the activation function of a node defines the output of that node given an input or set of inputs (https://en.wikipedia.org/wiki/Activation_function).

Receptive field (of a neuron or filter) - The region of the input space that activates a particular unit (i.e. neuron or filter) of the network. The receptive field can also be thought of as a projection of the activation map onto the input space. Therefore, where the activation map is defined in terms of filter (or layer) dimensions, the receptive field is defined in terms of input image dimensions.

To solve aforementioned issues of current technologies with labelling when changes to the network occur or there is a new network available, transfer learning may be used. Instead of repeating the time-consuming (manual) labelling procedure, knowledge transferred from a previous labelling process may be used. To accomplish this, a comparison is made between the rate/frequency of filter activations of the networks when the same dataset is passed through them, and a similarity method such as the calculation of the intersection of the networks' receptive fields is used, in order to obtain labels for some kernels without the need to manually go over them. Embodiments involve a threshold similarity in order to correctly assign labels to kernels and avoid too many or too little relations between activations.

The present disclosure concerns a method to automate the process of kernel labelling, or at least a part of it. Embodiments may transfer the knowledge from a model whose kernels have already been labelled to a one that requires labelling. The method may be applied for any CNNs, wherein a CNN is a network which has at least one convolutional layer.

A method according to an embodiment enables the transfer of the learning/knowledge from a labelled CNN to any unlabelled CNN. In order to accomplish this, filter activations and their receptive fields from images processed through a labelled CNN are recorded. Then, the same images are processed through the unlabelled CNN and filter activations and their receptive fields are recorded. The method includes labelling the filters in the unlabelled CNN based on the rate/frequency of co-activation with filters of the labelled CNN and the intersection of their receptive fields. The intersection of their receptive fields may be calculated using a similarity index/measure, e.g. Intersection over Union (IoU).

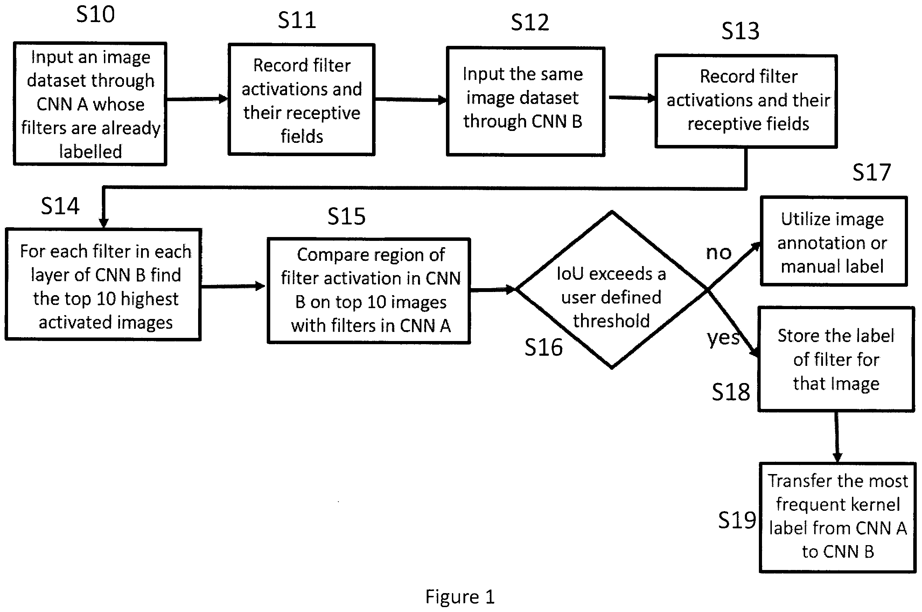

The method performs the following function as shown in Figure 1 (described below): the intersection of receptive fields between two networks is compared, and the frequency of kernel activations used, to identify similarities in order to automate the labelling process of a new network based on the knowledge from the old labelled network.

Figure 1 is a flow diagram illustrating an example method. As a brief overview of the method illustrated in Figure 1, first, an image dataset is passed through a pre-trained Convolutional Neural Network (CNN) A. The labels for its respective filters have been previously provided, for example manually by a human as is the standard procedure. The recording and storage of the filter activations and their receptive fields from CNN A then occurs. Next, the same is applied to the secondary network, which will be described as CNN B. CNN B is a network for which currently there is no information, i.e. there are no labels and for example without this method a manual procedure of labelling kernels would be required. Instead, according to the method, a comparison is made between the regions of activations from the filters of CNN B and CNN A and a similarity measure is used to calculate the overlapping regions. Therefore, the knowledge learned from and required for labelling the filters in CNN A may be transferred to CNN B and be used to label the filters of CNN B. A threshold similarity is defined (e.g. by the user) in order to avoid the transfer of incorrect labels. If no filter in CNN A is found with a similarity above the threshold similarity, then a label from CNN A is not transferred to CNN B and e.g. a manual label may be required. The benefit of this method is that kernel labels are transferred from CNN A to CNN B without human manual input. This automated method reduces the time that it takes to label a new network (CNN B) or update a network after retraining.

Figure 1 is described in more detail below.

In step S10, an image dataset Xᵢ ({X₁,... X_{N}} is input into a first trained convolutional neural network (CNN) A. The first CNN A is labelled. That is, the kernels of the first CNN A have been labelled (i.e. according to the feature(s) within an input image that the kernel detects or is "activated" by). In step S11, the filter activations of the first CNN A and their receptive fields are recorded for each image. For example, the activation map of each filter for each image is recorded, and for each filter the relative position within each image of the region which activates that filter (the activated region) is recorded as the receptive field. For example, CNN A has been already labelled manually by human observation and input.

In step S12, the same image dataset Xᵢ is input into a second trained CNN B. The second CNN B is not labelled. In step S13, the filter activations of the second CNN B and their receptive fields are recorded for each image, similarly to step S11.

In step S14, for each filter in CNN B, the ten images giving rise to the highest activation score in the filter are selected. Each activation map may be considered a tensor of activation values (or simply may be considered to comprise activation values). The corresponding activation score for that filter may be calculated as an average of the activation values in the activation map. The corresponding activation score for that filter may alternatively be calculated by any other function that aggregates the elements of the activation map (the activation values), for example the L2 norm.

Steps S15 to S19 are carried out for each filter in CNN B (or at least one or some of the filters in CNN B). Steps S15 to S19 will be described for a single filter in CNN B.

Steps S15 to S18 are carried out for each of the ten images. Steps S15 to S18 will be described for a single image.

In step S15 for the given filter in CNN B and for the given image, the filter in CNN B is compared with every filter (or at least one filter or a plurality the filters) of CNN A. That is, the activation region for the filter in CNN B is compared with the activation region of the filter(s) in CNN A, for the given image. The activation region for a filter is the region of the image that activates the filter and is described further below.

In step S15, as the comparison, an Intersection-over-Union (IoU) metric is calculated between the activation region of the filter in CNN B with the activation region of each of the filters in CNN A.

In step S16, it is determined whether any of the loU metrics calculated in step S16 exceeds (or is equal to or greater than) a threshold similarity (which may be user-defined). If none of the loU metrics is greater than the threshold similarity (or greater than or equal to the threshold similarity) then the method proceeds to step S17.

If, in step S16, it is determined that at least one of the loU metrics calculated in step S15 is greater than the threshold similarity (or is greater than or equal to the threshold similarity) then the method proceeds to step S18.

In step S18, the label of each (or the, if there is only one) filter of CNN A for which the loU of its activation region with the activation region in CNN B is greater than the threshold similarity (or is greater than or equal to the threshold similarity) is stored.

Steps S15, S16, and S18 are repeated so that they are carried out for each of the ten images. The result is the storage of a plurality of labels from filters in CNN A determined across the ten images to be similar to the given filter in CNN B.

In step S17, none of the labels of the filters in CNN A that were compared with the filter in CNN B for any of the ten images are used for the filter in CNN B. Instead, an image annotation or a manually assigned label is used for labelling the filter in CNN B.

In step S19, the most frequently appearing label among the stored labels is transferred to CNN B. That is, the given filter is labelled with the most frequently appearing label among the stored labels. If there are multiple labels appearing among the stored labels equally frequently and the most frequently, one of these labels may be selected automatically at random.

Steps S15 to S19 are repeated so that they are carried out for each filter in CNN B that is to be labelled.

The method illustrated in Figure 1 is an example. The method may be carried out for a single filter in CNN B, or some but not all of the filters in CNN B. In step S14, a different number of images may be selected. In step S14, images giving rise to activation maps having activation scores above a threshold activation score may be selected. The method may be carried out for one image or some but not all images in the dataset. Step S14 may be omitted and the subsequent steps carried out for all of the images (or the single image if one is used). Steps S10 and S11 may be carried out after step S14 and only for the selected images. The method may be carried out based on only one or some of the filters in CNN A. In some instances only one filter from CNN A may be determined sufficiently similar to the filter in CNN B and thus steps S18 and S19 may be replaced with a step of using the label from that filter to label the filter in CNN B (this may be the case for example if only one filter in CNN A is used and only one image is used to implement the method).

A similarity measure other than the loU metric may be used in the method. For example, the cosine distance or the chi-square distance (https://towardsdatascience.com/17-types-of-similarity-and-dissimilarity-measures-used-in-data-science-3eb914d2681). Other example similarity metrics include the Dice coefficient or F1Score, which measures the total overlap multiplied by two and divided by the total number of pixels in both images. In step S17, instead of utilizing an image annotation or a manually assigned label, no label may be assigned to the filter in CNN B.

Each filter in CNN A may output more than one activation region for a given input image. An activation map output by a filter will include all (non-overlapping) activation regions for the input image. For example, each activation region of a single filter in CNN A may be based on different parts of the input image and/or on different activated regions of the input image. Therefore the method described above may comprise in step S11 recording multiple filter activations and receptive fields for each (or the, if only one filter is being considered) filter. The multiple receptive fields may be considered a single receptive field, even if separated, e.g. at different sides of the input image. The same considerations apply to the filters of CNN B.

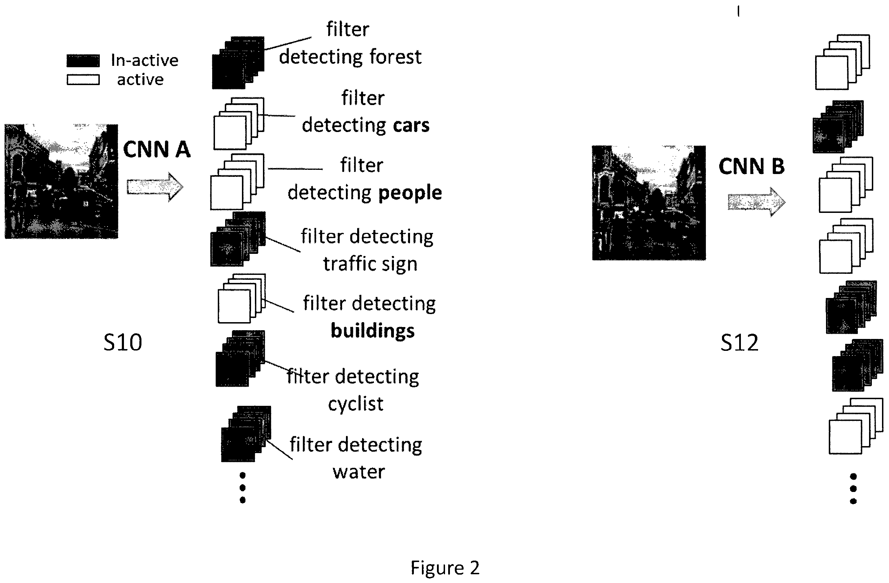

The disclosed method enables the transfer of the knowledge from the CNN A to another CNN (B) at the filter level, assuming that the filters of the pre-trained CNN A are already labelled, i.e., a concept has been assigned to their activation pattern. For example, one filter may fire (be activated) in response to traffic signs, another filter in response to cars etc. as may be seen in Figure 2 (which is a diagram illustrating the steps S10 and S12). The goal is to label the filters of a second CNN B using an auxiliary dataset D and the filter activations in CNN A. CNN B may have a completely different architecture and/or number of filters to CNN A.

Method steps and variations are described in further detail below (i.e. as part of the same running example).

Given a dataset {X₁,... X_{N}} of images, let *Fᵢ^{k(l)} =* (*Fᵢ₁^{k(l)}*, *Fᵢ₂^{k(l)}*,... *F_{iJ}^{k(l)}*) stand for the feature map (also known as activation map or simply activations) of the i-th layer of a CNN k ∈ {A,B} for the i-th image in the batch/dataset. The j-th filter in layer I of CNN k is represented by *fⱼ^{k(l)}.* Each *Fᵢⱼ^{k(l)}* for j = 1, ... M, k ∈ {A,B} is a 2D matrix of activations that is defined as the convolution of the feature map of layer l - 1 with the j-th filter for i-th image in the batch, i.e., *Fᵢⱼ^{k(l)} = Fᵢ^{k(l-1)}*fⱼ^{k(l)},* where * stands for the convolution operator followed by the rectified linear activation function, or ReLU (Rectified Linear Unit), which is an activation function. Other activation functions may be used, e.g. maxpooling, depending on the architecture. *Fᵢ^{k(0)}* = *Xᵢ* is the input image for k ∈ {A,B} . When ReLU is used as the activation function, as is assumed in the below description, each feature map *Fᵢⱼ^{k(l)}* will contain only non-negative values.

Each activation map *Fᵢⱼ^{k(l)}* is converted into a binary matrix (which may also be referred to as a quantized activation matrix) *Mᵢⱼ^{k(l)}* by setting non-zero activations (activation values) to 1. i.e. *M_{ij,xy}^{k(l)} =* 1 if *F_{ij,xy}^{k(l)} ≠* 0, and *M_{ij,xy}^{k(l)} =* 0 if *F_{ij,xy}^{k(l)} =* 0. The indices x,y denote the spatial coordinates in the 2D feature map of activation values.

The conversion to the binary matrix comprises the comparison of each activation value with a threshold activation value. In the case above the threshold activation value is zero. The threshold activation value may be a different value. The conversion to the binary matrix may comprise the comparison of the absolute value of each activation value with a threshold activation value (for example when the activation function leads to negative activation values).

In steps S10 to S13, each image Xᵢ in the dataset is passed through CNN A and CNN B and the quantized activation matrices *Mᵢⱼ^{A(l)}* and *Mᵢₙ^{B(m)}* for every filter *fⱼ^{A(l)}* of CNN A in layer l and for every filter *fₙ^{B(m)}* of CNN B in layer m are stored. Said quantized activation matrices are stored for every layer l in CNN A and for every layer m in CNN B so that the highest activated receptive fields may be compared to obtain labels for the filters in CNN B. Since CNN A and CNN B have the same (or a similar) architecture then the method is restricted to the case m = l, i.e. the filter comparison is only between filters in CNN A and CNN B in the same or corresponding layers. The same or similar architecture may be taken to mean that CNNs A and B have the same number of each type of layer as each other and that their layers are arranged in the same order as each other (though the numbers of filters/neurons in the layers could vary between CNNs A and B). This is because such filters (in the same or a corresponding layer) have the same receptive field size.

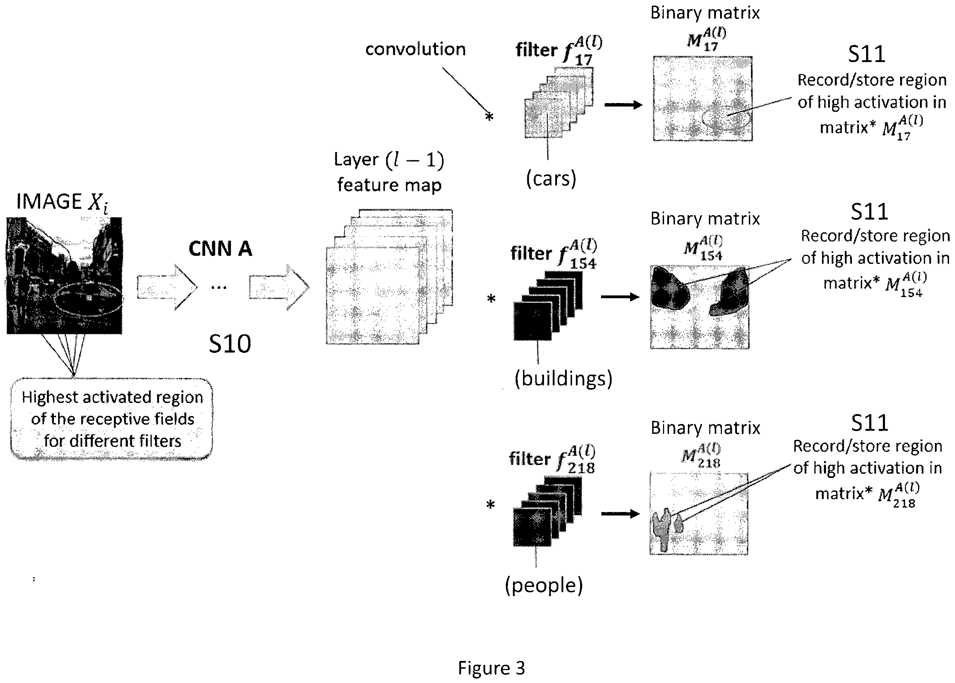

The non-zero activated region in each matrix *Mᵢⱼ^{k(l)},* k ∈ {A,B} will correspond to an active region/receptive field in the input image Xᵢ that describes the corresponding filter's (the j-th filter's) activation pattern. This is illustrated in Figure 3, which shows steps S10 and S11. That is, Figure 3 illustrates passing an image dataset through a labelled CNN A and recording filter activations after binarizing them (after converting the activation maps to binary matrices). When an activation map is converted to a binary matrix, the receptive field is binarized with respect to a threshold so that the shaded regions are full of 1s and the non-shaded (or lighter-shaded) regions are full of 0s. In the above description, a threshold of zero is used, so that any activation values in the activation map with a value greater than zero are assigned a value of 1 in the binary matrix whilst all other activation values in the activation map are assigned a value of zero in the binary matrix. A different threshold may be used.

The (highest) activated region for each filter in layer l of CNN A is recorded for each image Xᵢ.

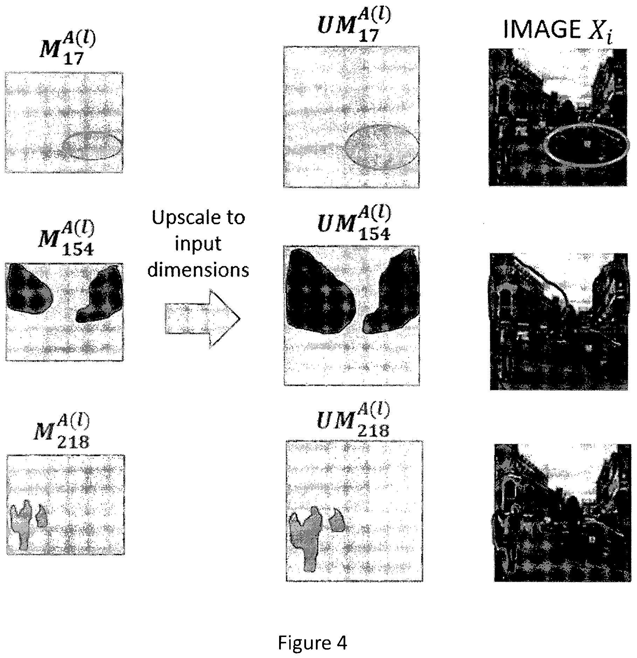

Each binary matrix *Mᵢⱼ^{k(l)}* may be upscaled to the dimensions of the input image Xᵢ by Nearest Neighbours interpolation to produce a binary matrix *UMᵢⱼ^{k(l)}* with dimensions equal to Xᵢ. Other interpolation methods may be used, for example, bilinear and Fourier transform interpolation. However, when an interpolation method outputs values e.g., between 0 and 1 a threshold would need to be applied again (i.e. binarization would need to be carried out again) in order to obtain the binary matrix. Figure 4 illustrates the upscaling of binary matrices, and also shows, for each binary matrix, a version of the input image Xᵢ with the activation region outlined.

Next, in step S14, for each filter in CNN B, at least one image (e.g. the top ten) with the highest activation of the filter is selected as described above.

Next, in step S15, the loU metric is calculated between the binary matrices *UMᵢᵣ^{B(m)}* and *UMᵢⱼ^{A(l)}* for all filters *fᵣ^{B(m)}* in layer m of CNN B and all filters *fᵢ^{A(l)}* in layer l of CNN A, for the selected images with the highest activation. Then, in steps S16 and S18, for a given filter *fᵣ^{B(m)}* in CNN B the method finds the filters *f_{j*} ^{A(l)}* in CNN A whose binary matrices *UM_{iJ*}^{A(l)}* have an loU metric with *UMᵢᵣ^{B(m)}* above the threshold similarity (across the selected images). If there are multiple such filters from CNN A, then the label appearing most frequently among those filters is transferred to the given filter of CNN B (i.e. the method labels the filter of CNN B with the label) in step S19. If there is only one such label, then of course that label is transferred in step S19. If there are multiple filters having an IoU metric with *UMᵢᵣ^{B(m)}* above the threshold similarity (across the selected images) that appear equally frequently and the most frequently, one of these filters (and its corresponding label) may be selected automatically at random.

Alternatively, instead of finding filters as mentioned above in order to determine a label to transfer (steps S16 to S19), the method may label the filter of CNN B with the label of the labelled filter in CNN A corresponding to the highest loU metric across the selected input images. The method may comprise first checking the highest IoU metric against the threshold similarity. Alternatively, the "threshold similarity" in this case may be considered the second highest loU calculated.

Alternatively, in steps S16 to S19, the method may determine the one or more highest IoU metrics for each image and select the corresponding labels (and may check each said loU against the threshold similarity before selecting it) and then label the filter in CNN B with the label appearing most frequently among the selected labels (or simply use the selected label if there is only one selected label).

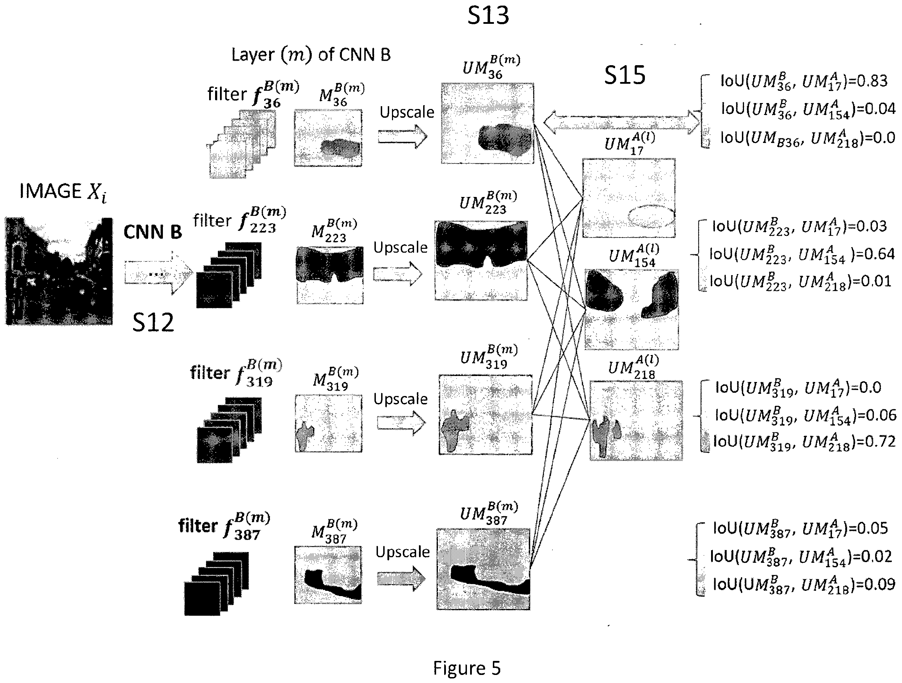

Figure 5 is a diagram illustrating steps S12, S13, and S15. In step S12, the image dataset is passed through CNN B and in step S13, filter activations are recorded after binarizing them (converting them into binary matrices). That is, the binary matrices are recorded. In step S15, for each filter in CNN B, the upscaled binary matrices (to match the resolution/scale of each corresponding input image) of CNN A and CNN B are compared in terms of a similarity metric (e.g. loU), for example using the binary matrices corresponding to the ten input images that activate the filter in CNN B the most. For each filter, the filter in CNN B may be assigned the most frequently appearing label among the labels corresponding to binary matrices of CNN A having an loU metric with the binary matrix of the filter of CNN B which is more than (or equal) to the threshold similarity. If, for a given filter in CNN B, none of the binary matrices of CNN A have an IoU metric with the binary matrix of the filter of CNN B which is more than (or equal) to the threshold similarity, the filter in CNN B remains unlabeled. Of course, the other methods described above of choosing a label to assign to a given filter in CNN B may be used.

In more detail, looking at the top row in Figure 5, filter 36 of layer m in CNN B outputs a feature map which is converted into the binary matrix *M₃₆^{B(m)},* which is upscaled to match the resolution/scale/size of the input image to generate the upscaled binary matrix (which may be referred to simply as a binary matrix) *UM₃₆^{B(m)}.* The loU metric is calculated for the binary matrix *UM₃₆^{B(m)}* with each of the binary matrices *UM₁₇^{A(l)}, UM₁₅₄^{A(l)},* and *UM₂₁₈^{A(l)}* obtained from the filters 17, 154, and 218 in layer l of CNN A, respectively, based on the same input image. Corresponding explanations apply for the other filters illustrated in Figure 5. The notation is simplified on the right-hand-side of Figure 5 by omitting the index of the layer m or I.

Figure 5 illustrates the comparison of 4 filters in CNN B with three filters in CNN A. Of course, more or less filters of CNN A and/or CNN B may be compared in step S15. Furthermore, in step S15 each filter in CNN B need not be compared with the same filters in CNN A. For example, in step S15, for each filter in CNN B, filters of CNN A may be selected for comparison by selecting the filters which are activated the most by the selected input images for that filter in CNN B. The filters in CNN A that are "activated the most" may be considered the filters giving rise to the highest activation scores calculated for each filter as the average of the activation values in the corresponding feature map, as described above). Alternatively, or additionally, for each filter in CNN B (and optionally for the or each selected input image), filters in CNN A having an activation score above a threshold activation score may be selected for comparison with the filter in CNN B. Of course, in step S15, each filter in CNN B may be compared with every filter in the corresponding layer of CNN A or in some layers or all layers in CNN A.

If the comparison in step S15 leads to no filters in CNN A matching the criterion (e.g. loU above (or equal to) the threshold similarity) then as described above with reference to step S17 the filter is not assigned a label from CNN A. The method may be repeated using another CNN as the CNN A (for example, datasets that contain annotations may be mined to determine such a CNN). Or a label may be assigned (e.g. manually) after inspecting the highest activated region in the corresponding receptive field.

The conversion of the activation maps to binary matrices may be omitted and a suitable similarity measure (e.g. cosine distance) may be calculated between the activation maps rather than between the binary matrices. Furthermore, the upscaling of the binary matrices may be omitted. Instead, the activation maps may be upscaled to match the size/scale/resolution of the input image.

In the above description, particular elements being "stored" is not essential. For example, these elements may be only temporarily stored in the way that any element used by a computer has to be "stored". Of course, some elements may actually be stored in memory in a more long-term manner, i.e. in the traditional sense of the word.

A worked example will now be described with reference to the Figures already described. Figure 3 illustrates step S10 in which an image is input into CNN A. Three filters in CNN A are already labelled. That is, the filters f₁₇^{A}, f₁₅₄^{A}, and f₂₁₈^{A} are assigned cars, buildings, and people labels, respectively.

Figure 5 illustrates step S12 in which the same image is processed through CNN B. Due to the different architecture of CNN B, different filters compared to those in CNN A will identify the same objects/features in the image. This can be observed in Figure 5. When the same image is processed through CNN B, there are different activations and different respective fields. A comparison is made between the filters in CNN B with the filters in CNN A. A measure of similarity, the loU metric, indicates the similarity of each filter activated in CNN B with each filter in CNN A. In particular, the filter f₃₆^{B} of CNN B has the highest similarity with the filter f₁₇^{A} among the filters in CNN A, with an IoU metric of 0.83. Therefore the label "cars" is transferred to filter f₃₆^{B} of CNN B. Similarly, the filter f₂₂₃^{B} has the highest similarity (an loU metric of 0.64) with the filter f₁₅₄^{A} and thus the label "buildings" is transferred to filter f₂₂₃^{B} of CNN B. The filter f₃₁₉^{B} is calculated to be most similar to the filter f₂₁₈^{A} with an IoU metric of 0.72 and therefore is assigned the label "people". On the other hand, as no comparison of the filter f₃₈₇^{B} with the filters in CNN A resulted in an IoU metric above the threshold similarity, no label from the filters of CNN A is transferred to the filter f₃₈₇^{B} of CNN B. A label for this filter may be assigned manually.

In the worked example, one image is used and some filters selected from CNN B and CNN A are used. Of course, different numbers of filters and images may be used and these may be selected in many different ways as described above.

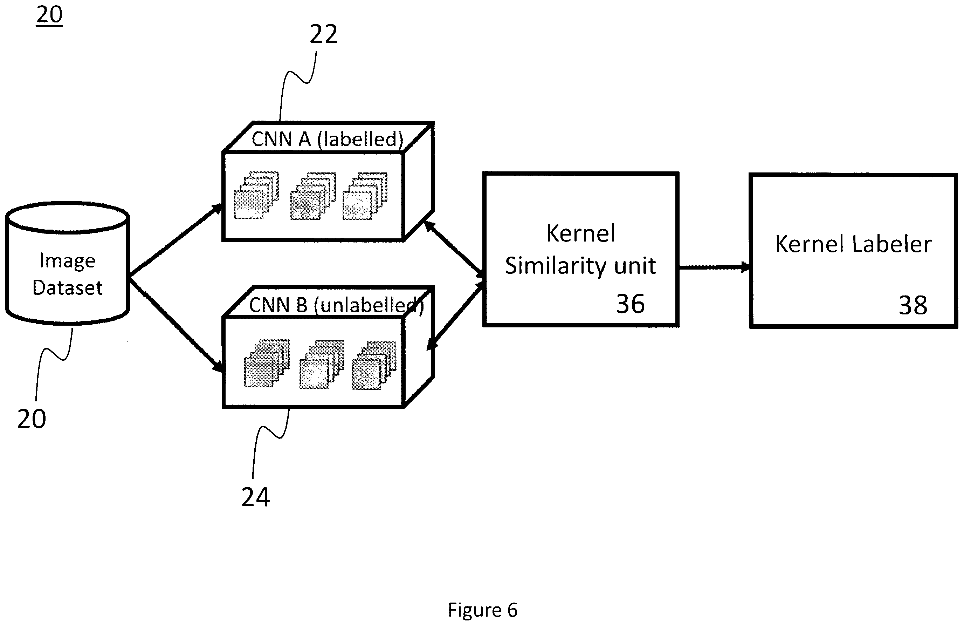

Figure 6 illustrates a system 20 comprising the image dataset 20, CNN A 22, CNN B 24, a kernel similarity unit 36, and a kernel labeler 38. The kernel similarity unit 36 and the kernel labeler 38 may be considered to carry out any of the method steps described above. For example, the kernel similarity unit 36 may be considered to carry out steps S10 to S15, and the kernel labeler 38 may be considered to carry out steps S16 to S19.

The invention may be used for any of the following applications, among others.
- Debugging detections from CNNs. When tasked with object detection CNNs currently perform extremely well. There has been a tremendous development and performance increase in object detection using CNNs. However, errors still occur. Conventionally, if an error occurs in a CNN the researcher does not have a clear justification as to why the error occurred or how the CNN should be changed to rectify the issue. A method according to an embodiment may provide a way for faster expansion and implementation of XAI as it may reduce the time required to label kernels for CNNs. Therefore, during the debugging of CNNs when a researcher will try to fix an error, they will have the assistance of the filter/kernel labels and will merely need to examine "black box" results of the CNN. That is, providing labels may assist the debugging process with a clearer view of what exactly went wrong, and the invention enables faster and less labour-intensive provision of labels.
- Traffic Signs Identification for Autonomous Vehicles. Autonomous vehicles are rising in popularity. With their deployment already available in some parts of the world, questions are being raised regarding their safety and accountability. An autonomous vehicle is tasked with taking over all the decisions of the human and must make correct decisions. However, the decisions made by an autonomous vehicle will not always be correct, and in order to be able to understand why (i.e. what caused the error/problem in the autonomous vehicle), XAI is required. One crucial task of autonomous vehicles is to correctly identify traffic signs in their camera view and follow the corresponding required instructions. The invention may be implemented in labelling the filters of a CNN which is configured to identify traffic signs and classify them accordingly. Since the filters of such a CNN will be labelled, if a mistake happens in the autonomous vehicle, the source of the mistake may be more easily found. For example, if a mistake is made in the course of a decision based on a stop sign, the filter in the CNN with the relevant label (e.g. "stop signs") may be examined, rather than having to explore all the filters and activations to try to locate the source of the mistake.
- Cyber security and AI models. As the use of Al models expands and extends to everyday life, so does the risk of Al models being manipulated, e.g. for a hacker's own benefit. To provide more security to these models, more advanced Al models may be used for implementing cyber security measures. XAI can provide an insight into how such models work and can provide accountability and the ability to understand how the models provide security. The invention provides a way to label filters and therefore understand how these models work, and allows for the expansion of their implementation in cyber security within a reduced time window.

The invention provides a novel method for knowledge transfer when labelling kernels based on filter activations that paves a path to explainable AI. Embodiments may reduce the time required for labelling (e.g. compared to the manual labelling process) by providing an automated procedure and leveraging the learning carried out in a previous CNN training stage, as well as the knowledge recorded through labelling carried out previously. This faster and less labor-intensive labelling process may increase the efficiency of XAI and expand its applications more widely in a shorter time span.

In other words, the invention provides a method for the automation of labelling kernels required for neural-symbolic learning. Knowledge is transferred between a labelled network and a new (unlabelled) network by comparing filter activations between the two networks (and their frequency) and calculating the similarity. An embodiment includes the use of a similarity index for transferring kernel labels from one network to another.

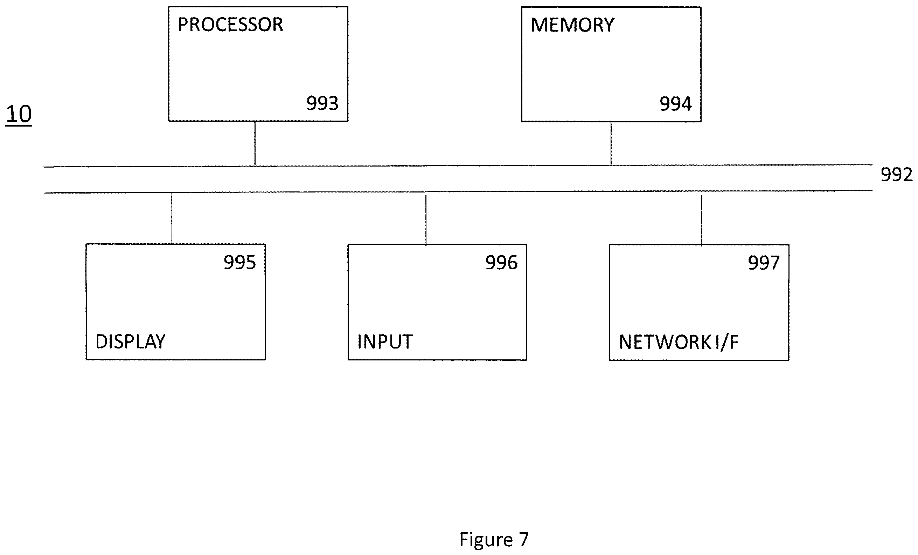

Figure 7 is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above, e.g. any of S10-S19 in Figure 1.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a general purpose computer, special purpose computer, or special purpose processing device (e.g., one or more processors) to perform one or more functions or operations. For example, the computer-executable instructions may include those instructions for implementing a method disclosed herein, or any method steps disclosed herein, for example the method or any method steps illustrated in Figure 1 (any of the steps S10 to S19). Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store at least one CNN (CNN A and/or CNN B, for example) and/or filter activations and/or receptive fields and/or labels and/or activation maps and/or binary matrices and/or activation values/scores and/or similarity measures and/or ranking information of filters. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor may correspond to the kernel similarity unit 36 and the kernel labeller 38.

The display unit 995 may display a representation of data stored by the computing device, such as a CNN (A and/or B) and/or filter activations and/or receptive fields and/or labels and/or activation maps and/or binary matrices and/or activation values/scores and/or similarity measures and/or ranking information of filters and/or interactive representations enabling a user to select CNNs for use in the method described above, and/or any other output described above, and may also display a cursor and dialog boxes and screens enabling interaction between a user and the programs and data stored on the computing device. The input mechanisms 996 may enable a user to input data and instructions to the computing device, such as enabling a user to select CNNs for use in the method described above.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 7. Such a computing device need not have every component illustrated in Figure 7, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

## Claims

1. A computer-implemented method comprising:
obtaining, based on an input image, a plurality of first activation maps of a plurality of labelled filters of a layer of a first convolutional neural network, wherein the first convolutional neural network is configured to identify one or more objects in the input image;
selecting at least one first activation map each having an activation score above a threshold activation score or having the highest activation score;
obtaining, based on the input image, a second activation map of a filter of a layer of a second convolutional neural network, wherein the second convolutional neural network is configured to identify one or more objects in the input image, and wherein the layer of the second convolutional neural network corresponds to the layer of the first convolutional neural network;
calculating a similarity measure between the first activation map and the second activation map for each of a plurality of pairs each comprising the second activation map and one of the at least one selected first activation maps; and
labelling the filter of the second convolutional neural network with a label of the labelled filter corresponding to the first activation map belonging to the pair with the highest similarity measure.

2. The computer-implemented method as claimed in claim 1, wherein calculating the similarity measure comprises converting the first and second activation maps into first and second binary matrices, respectively, and calculating the similarity measure between the first and second binary matrices.

3. The computer-implemented method as claimed in claim 2, further comprising, before calculating the similarity measure between the first and second binary matrices, scaling the first and second binary matrices to dimensions of the input image, optionally using nearest neighbors interpolation.

4. The computer-implemented method as claimed in claim 2 or claim 3, wherein converting the first and second activation maps into first and second binary matrices comprises setting each activation value which has an absolute value above a threshold value in the first and second activation maps to a first value, and setting each activation value which has an absolute value equal to or below the threshold value to a second value.

5. The computer-implemented method as claimed in any of claims 2 to 4, wherein calculating the similarity measure comprises calculating an intersection-over-union, loU, metric between the first and second binary matrices.

6. The computer-implemented method as claimed in claim 1, wherein calculating the similarity measure comprises calculating a cosine distance metric between the first and second activation maps.

7. The computer-implemented method as claimed in any of the preceding claims, further comprising using the second CNN in the control of an autonomous or semi-autonomous vehicle.

8. The computer-implemented method as claimed in any of the preceding claims, wherein the method comprises re-training the first CNN to provide the second CNN.

9. A computer-implemented method comprising:
obtaining, based on a plurality of input images, a plurality of corresponding activation maps of a filter of a second convolutional neural network, each activation map comprising activation values;
for each input image, calculating an activation score as an aggregation of the activation values of the corresponding activation map and selecting at least one input image having an activation score above a threshold activation score or having the highest activation score among the input images; and
using the at least one selected input image, implementing the method as claimed in any of the preceding claims.

10. A computer-implemented method comprising implementing the computer-implemented method as claimed in any of the preceding claims for a plurality of filters of the second convolutional neural network.

11. A computer program which, when run on a computer, causes the computer to carry out a method comprising:
obtaining, based on an input image, a plurality of first activation maps of a plurality of labelled filters of a layer of a first convolutional neural network, wherein the first convolutional neural network is configured to identify one or more objects in the input image;
selecting at least one first activation map each having an activation score above a threshold activation score or having the highest activation score;
obtaining, based on the input image, a second activation map of a filter of a layer of a second convolutional neural network, wherein the second convolutional neural network is configured to identify one or more objects in the input image, and wherein the layer of the second convolutional neural network corresponds to the layer of the first convolutional neural network;
calculating a similarity measure between the first activation map and the second activation map for each of a plurality of pairs each comprising the second activation map and one of the at least one selected first activation maps; and
labelling the filter of the second convolutional neural network with a label of the labelled filter corresponding to the first activation map belonging to the pair with the highest similarity measure.

12. An information processing apparatus (10) comprising a memory (994) and a processor (993) connected to the memory (994), wherein the processor (993) is configured to:
obtain, based on an input image, a plurality of first activation maps of a plurality of labelled filters of a layer of a first convolutional neural network, wherein the first convolutional neural network is configured to identify one or more objects in the input image;
obtain, based on the input image, a second activation map of a filter of a layer of a second convolutional neural network, wherein the second convolutional neural network is configured to identify one or more objects in the input image, and wherein the layer of the second convolutional neural network corresponds to the layer of the first convolutional neural network;
calculate a similarity measure between the first activation map and the second activation map for each of a plurality of pairs each comprising the second activation map and one of the at least one selected first activation maps; and
label the filter of the second convolutional neural network with a label of the labelled filter corresponding to the first activation map belonging to the pair with the highest similarity measure.

## Patentansprüche

1. Computerimplementiertes Verfahren, das Folgendes umfasst:
Erlangen einer Vielzahl von ersten Aktivierungskarten einer Vielzahl von beschrifteten Filtern einer Schicht eines ersten neuronalen Faltungsnetzes basierend auf einem Eingabebild, wobei das erste neuronale Faltungsnetz dazu konfiguriert ist, ein oder mehrere Objekte in dem Eingabebild zu identifizieren;
Auswählen mindestens einer ersten Aktivierungskarte, die jeweils eine Aktivierungsbewertung über einer Schwellenaktivierungsbewertung aufweist oder die höchste Aktivierungsbewertung aufweist;
Erlangen einer zweiten Aktivierungskarte eines Filters einer Schicht eines zweiten neuronalen Faltungsnetzes basierend auf dem Eingangsbild, wobei das zweite neuronale Faltungsnetz dazu konfiguriert ist, ein oder mehrere Objekte in dem Eingangsbild zu identifizieren, und wobei die Schicht des zweiten neuronalen Faltungsnetzes der Schicht des ersten neuronalen Faltungsnetzes entspricht;
Berechnen eines Ähnlichkeitsmaßes zwischen der ersten Aktivierungskarte und der zweiten Aktivierungskarte für jedes einer Vielzahl von Paaren, wobei jedes die zweite Aktivierungskarte und eine der mindestens einen ausgewählten ersten Aktivierungskarten umfasst; und
Beschriften des Filters des zweiten neuronalen Faltungsnetzes mit einer Beschriftung des beschrifteten Filters, die der ersten Aktivierungskarte entspricht, die zu dem Paar mit dem höchsten Ähnlichkeitsmaß gehört.

2. Computerimplementiertes Verfahren nach Anspruch 1, wobei das Berechnen des Ähnlichkeitsmaßes Umwandeln der ersten und der zweiten Aktivierungskarte in eine erste bzw. zweite Binärmatrize und Berechnen des Ähnlichkeitsmaßes zwischen der ersten und der zweiten Binärmatrize umfasst.

3. Computerimplementiertes Verfahren nach Anspruch 2, ferner umfassend Skalieren der ersten und der zweiten Binärmatrize auf Dimensionen des Eingangsbildes vor dem Berechnen des Ähnlichkeitsmaßes zwischen der ersten und der zweiten Binärmatrize, optional unter Verwendung von Interpolation nächstliegender Nachbarn.

4. Computerimplementiertes Verfahren nach Anspruch 2 oder Anspruch 3, wobei das Umwandeln der ersten und der zweiten Aktivierungskarte in die erste und die zweite Binärmatrize Setzen jedes Aktivierungswerts, der einen Absolutwert über einem Schwellwert in der ersten und der zweiten Aktivierungskarte aufweist, auf einen ersten Wert und Setzen jedes Aktivierungswerts, der einen Absolutwert gleich dem Schwellwert oder unter diesem aufweist, auf einen zweiten Wert umfasst.

5. Computerimplementiertes Verfahren nach einem der Ansprüche 2 bis 4, wobei das Berechnen des Ähnlichkeitsmaßes Berechnen einer Metrik der Intersection over Union (IoU) zwischen der ersten und der zweiten Binärmatrize umfasst.

6. Computerimplementiertes Verfahren nach Anspruch 1, wobei das Berechnen des Ähnlichkeitsmaßes Berechnen einer Cosinus-Distanzmetrik zwischen der ersten und der zweiten Aktivierungskarte umfasst.

7. Computerimplementiertes Verfahren nach einem der vorhergehenden Ansprüche, ferner umfassend Verwenden des zweiten CNN bei der Steuerung eines autonomen oder teilautonomen Fahrzeugs.

8. Computerimplementiertes Verfahren nach einem der vorhergehenden Ansprüche, wobei das Verfahren erneutes Trainieren des ersten CNN umfasst, um das zweite CNN bereitzustellen.

9. Computerimplementiertes Verfahren, das Folgendes umfasst:
Erlangen einer Vielzahl von entsprechenden Aktivierungskarten eines Filters eines zweiten neuronalen Faltungsnetzes basierend auf einer Vielzahl von Eingabebildern, wobei jede Aktivierungskarte Aktivierungswerte umfasst;
Berechnen einer Aktivierungsbewertung für jedes Eingabebild als eine Aggregation der Aktivierungswerte der entsprechenden Aktivierungskarte und Auswählen mindestens eines Eingabebildes, das eine Aktivierungsbewertung über einer Schwellenaktivierungsbewertung aufweist oder die höchste Aktivierungsbewertung unter den Eingabebildern aufweist; und
Implementieren des Verfahrens nach einem der vorhergehenden Ansprüche unter Verwendung des mindestens einen ausgewählten Eingabebildes.

10. Computerimplementiertes Verfahren, umfassend Implementieren des computerimplementierten Verfahrens nach einem der vorhergehenden Ansprüche für eine Vielzahl von Filtern des zweiten neuronalen Faltungsnetzes.

11. Computerprogramm, das bei Ausführung auf einem Computer den Computer dazu veranlasst, ein Verfahren durchzuführen, das Folgendes umfasst:
Erlangen einer Vielzahl von ersten Aktivierungskarten einer Vielzahl von beschrifteten Filtern einer Schicht eines ersten neuronalen Faltungsnetzes basierend auf einem Eingabebild, wobei das erste neuronale Faltungsnetz dazu konfiguriert ist, ein oder mehrere Objekte in dem Eingabebild zu identifizieren;
Auswählen mindestens einer ersten Aktivierungskarte, die jeweils eine Aktivierungsbewertung über einer Schwellenaktivierungsbewertung aufweist oder die höchste Aktivierungsbewertung aufweist;
Erlangen einer zweiten Aktivierungskarte eines Filters einer Schicht eines zweiten neuronalen Faltungsnetzes basierend auf dem Eingangsbild, wobei das zweite neuronale Faltungsnetz dazu konfiguriert ist, ein oder mehrere Objekte in dem Eingangsbild zu identifizieren, und wobei die Schicht des zweiten neuronalen Faltungsnetzes der Schicht des ersten neuronalen Faltungsnetzes entspricht;
Berechnen eines Ähnlichkeitsmaßes zwischen der ersten Aktivierungskarte und der zweiten Aktivierungskarte für jedes einer Vielzahl von Paaren, wobei jedes die zweite Aktivierungskarte und eine der mindestens einen ausgewählten ersten Aktivierungskarten umfasst; und
Beschriften des Filters des zweiten neuronalen Faltungsnetzes mit einer Beschriftung des beschrifteten Filters, die der ersten Aktivierungskarte entspricht, die zu dem Paar mit dem höchsten Ähnlichkeitsmaß gehört.

12. Informationsverarbeitungsvorrichtung (10), umfassend einen Speicher (994) und einen mit dem Speicher (994) verbundenen Prozessor (993), wobei der Prozessor (993) zu Folgendem konfiguriert ist:
Erlangen einer Vielzahl von ersten Aktivierungskarten einer Vielzahl von beschrifteten Filtern einer Schicht eines ersten neuronalen Faltungsnetzes basierend auf einem Eingabebild, wobei das erste neuronale Faltungsnetz dazu konfiguriert ist, ein oder mehrere Objekte in dem Eingabebild zu identifizieren;
Erlangen einer zweiten Aktivierungskarte eines Filters einer Schicht eines zweiten neuronalen Faltungsnetzes basierend auf dem Eingangsbild, wobei das zweite neuronale Faltungsnetz dazu konfiguriert ist, ein oder mehrere Objekte in dem Eingangsbild zu identifizieren, und wobei die Schicht des zweiten neuronalen Faltungsnetzes der Schicht des ersten neuronalen Faltungsnetzes entspricht;
Berechnen eines Ähnlichkeitsmaßes zwischen der ersten Aktivierungskarte und der zweiten Aktivierungskarte für jedes einer Vielzahl von Paaren, wobei jedes die zweite Aktivierungskarte und eine der mindestens einen ausgewählten ersten Aktivierungskarten umfasst; und
Beschriften des Filters des zweiten neuronalen Faltungsnetzes mit einer Beschriftung des beschrifteten Filters, die der ersten Aktivierungskarte entspricht, die zu dem Paar mit dem höchsten Ähnlichkeitsmaß gehört.

## Revendications

1. Procédé mis en œuvre par ordinateur comprenant :
l'obtention, sur la base d'une image d'entrée, d'une pluralité de premières cartes d'activation d'une pluralité de filtres étiquetés d'une couche d'un premier réseau neuronal convolutionnel, dans lequel le premier réseau neuronal convolutionnel est configuré pour identifier un ou plusieurs objets dans l'image d'entrée ;
la sélection d'au moins une première carte d'activation ayant chacune un score d'activation supérieur à un score d'activation seuil ou ayant le score d'activation le plus élevé ;
l'obtention, sur la base de l'image d'entrée, d'une seconde carte d'activation d'un filtre d'une couche d'un second réseau neuronal convolutionnel, dans lequel le second réseau neuronal convolutionnel est configuré pour identifier un ou plusieurs objets dans l'image d'entrée, et dans lequel la couche du second réseau neuronal convolutionnel correspond à la couche du premier réseau neuronal convolutionnel ;
le calcul d'une mesure de similarité entre la première carte d'activation et la seconde carte d'activation pour chacune d'une pluralité de paires comprenant chacune la seconde carte d'activation et une des au moins une premières cartes d'activation sélectionnées ; et
l'étiquetage du filtre du second réseau neuronal convolutionnel avec une étiquette du filtre étiqueté correspondant à la première carte d'activation appartenant à la paire avec la mesure de similarité la plus élevée.

2. Procédé mis en œuvre par ordinateur selon la revendication 1, dans lequel le calcul de la mesure de similarité comprend la conversion des première et seconde cartes d'activation en première et seconde matrices binaires, respectivement, et le calcul de la mesure de similarité entre les première et seconde matrices binaires.

3. Procédé mis en œuvre par ordinateur selon la revendication 2, comprenant également, avant de calculer la mesure de similarité entre les première et seconde matrices binaires, la mise à l'échelle des première et seconde matrices binaires aux dimensions de l'image d'entrée, en utilisant éventuellement une interpolation par voisins les plus proches.

4. Procédé mis en œuvre par ordinateur selon la revendication 2 ou la revendication 3, dans lequel la conversion des première et seconde cartes d'activation en première et seconde matrices binaires comprend la définition de chaque valeur d'activation qui a une valeur absolue supérieure à une valeur de seuil dans les première et seconde cartes d'activation à une première valeur, et la définition de chaque valeur d'activation qui a une valeur absolue égale ou inférieure à la valeur de seuil à une seconde valeur.

5. Procédé mis en œuvre par ordinateur selon l'une quelconque des revendications 2 à 4, dans lequel le calcul de la mesure de similarité comprend le calcul d'une métrique d'intersection sur union, IoU, entre les première et seconde matrices binaires.

6. Procédé mis en œuvre par ordinateur selon la revendication 1, dans lequel le calcul de la mesure de similarité comprend le calcul d'une métrique de distance cosinus entre les première et seconde cartes d'activation.

7. Procédé mis en œuvre par ordinateur selon l'une quelconque des revendications précédentes, comprenant également l'utilisation du second CNN dans le contrôle d'un véhicule autonome ou semi-autonome.

8. Procédé mis en œuvre par ordinateur selon l'une quelconque des revendications précédentes, dans lequel le procédé comprend le réentraînement du premier CNN pour fournir le second CNN.

9. Procédé mis en œuvre par ordinateur comprenant :
l'obtention, sur la base d'une pluralité d'images d'entrée, d'une pluralité de cartes d'activation correspondantes d'un filtre d'un second réseau neuronal convolutionnel, chaque carte d'activation comprenant des valeurs d'activation ;
pour chaque image d'entrée, le calcul d'un score d'activation en tant qu'agrégation des valeurs d'activation de la carte d'activation correspondante et la sélection d'au moins une image d'entrée ayant un score d'activation supérieur à un score d'activation seuil ou ayant le score d'activation le plus élevé parmi les images d'entrée ; et
l'utilisation de l'au moins une image d'entrée sélectionnée, mettant en œuvre le procédé selon l'une quelconque des revendications précédentes.

10. Procédé mis en œuvre par ordinateur comprenant la mise en œuvre du procédé mis en œuvre par ordinateur selon l'une quelconque des revendications précédentes pour une pluralité de filtres du second réseau neuronal convolutionnel.

11. Programme informatique qui, lorsqu'il est exécuté sur un ordinateur, amène l'ordinateur à exécuter un procédé comprenant :
l'obtention, sur la base d'une image d'entrée, d'une pluralité de premières cartes d'activation d'une pluralité de filtres étiquetés d'une couche d'un premier réseau neuronal convolutionnel, dans lequel le premier réseau neuronal convolutionnel est configuré pour identifier un ou plusieurs objets dans l'image d'entrée ;
la sélection d'au moins une première carte d'activation ayant chacune un score d'activation supérieur à un score d'activation seuil ou ayant le score d'activation le plus élevé ;
l'obtention, sur la base de l'image d'entrée, d'une seconde carte d'activation d'un filtre d'une couche d'un second réseau neuronal convolutionnel, dans lequel le second réseau neuronal convolutionnel est configuré pour identifier un ou plusieurs objets dans l'image d'entrée, et dans lequel la couche du second réseau neuronal convolutionnel correspond à la couche du premier réseau neuronal convolutionnel ;
le calcul d'une mesure de similarité entre la première carte d'activation et la seconde carte d'activation pour chacune d'une pluralité de paires comprenant chacune la seconde carte d'activation et une des au moins une premières cartes d'activation sélectionnées ; et
l'étiquetage du filtre du second réseau neuronal convolutionnel avec une étiquette du filtre étiqueté correspondant à la première carte d'activation appartenant à la paire avec la mesure de similarité la plus élevée.

12. Appareil de traitement d'informations (10) comprenant une mémoire (994) et un processeur (993) connecté à la mémoire (994), dans lequel le processeur (993) est configuré pour :
obtenir, sur la base d'une image d'entrée, une pluralité de premières cartes d'activation d'une pluralité de filtres étiquetés d'une couche d'un premier réseau neuronal convolutionnel, dans lequel le premier réseau neuronal convolutionnel est configuré pour identifier un ou plusieurs objets dans l'image d'entrée ;
obtenir, sur la base de l'image d'entrée, une seconde carte d'activation d'un filtre d'une couche d'un second réseau neuronal convolutionnel, dans lequel le second réseau neuronal convolutionnel est configuré pour identifier un ou plusieurs objets dans l'image d'entrée, et dans lequel la couche du second réseau neuronal convolutionnel correspond à la couche du premier réseau neuronal convolutionnel ;
calculer une mesure de similarité entre la première carte d'activation et la seconde carte d'activation pour chacune d'une pluralité de paires comprenant chacune la seconde carte d'activation et une des au moins une premières cartes d'activation sélectionnées ; et
étiqueter le filtre du second réseau neuronal convolutionnel avec une étiquette du filtre étiqueté correspondant à la première carte d'activation appartenant à la paire avec la mesure de similarité la plus élevée.
